# EUROPEAN PATENT APPLICATION

(11) **EP 2 042 301 A1**
(43) Date of publication of application: **01.04.2009**
(21) Application number: 07790817.6
(22) Date of filing: 17.07.2007
(51) Int. Cl.: B32B 27/32, B32B 27/36, B65D 5/43, B65D 30/02, B65D 65/40, B65D 75/34

(54) **LAMINATED SHEET MATERIAL**

(30) Priority: 19.07.2006 JP 2006197145
(71) Applicant: MITSUBISHI PLASTICS, INC., Tokyo 103-0021 (JP)
(72) Inventor: MIYASHITA, Kazuhisa, Nagahama-shi Shiga 526-8660 (JP); HIRUMA, Takashi, Nagahama-shi Shiga 526-8660 (JP); SUZUKI, Maiko, Nagahama-shi Shiga 526-8660 (JP); YAMADA, Takeyoshi, Nagahama-shi Shiga 526-8660 (JP); TANAKA, Kazuya, Nagahama-shi Shiga 526-8660 (JP); TAKAGI, Jun, Nagahama-shi Shiga 526-8660 (JP)
(74) Representative: Gille Hrabal Struck Neidlein Prop Roos
(86) International application number: PCT/JP2007/064055
(87) International publication number: WO 2008/010471

(57) **Abstract**

The present invention provides a high quality laminated sheet material prepared using as much materials of biological origin as possible in order to contribute to the prevention of deterioration of the environment and provide a reduction in the amount of exhaustible resources being consumed.

The laminated sheet material of the present invention is **characterized by** having at least one first layer and at least two different kinds of layers selected from the group consisting of a second layer, a third layer and a fourth layer, wherein the first layer has a resin composition A which includes a polyester resin (a) containing 25% or more of a component of biological origin and a polyolefin resin (b); the second layer has as the main component the polyester resin (a) containing 25% or more of a component of biological origin; the third layer has as the main component the polyolefin resin (b); and the fourth layer has as the main component an adhesive resin (c).

## Description

### [Technical Field]

The present invention relates to an industrial use of thermoplastic resins made from raw materials of biological origin, and more particularly to an environmentally friendly sheet material prepared reducing as much amount of using raw materials derived from exhaustible resources representing petroleum as possible.

### [Background Art]

Plastic materials (thermoplastic resins) which have conventionally found wide application in packaging materials, cards, containers and the like, for example, polyethylene, polyamide and polystyrene. These plastic materials are made from finite resources such as petroleum, so that there have been concerns about the exhaustion of these resources. These resources are substances formed by the heating and pressurization of carbon-based life forms which have accumulated deep in the earth over millions of years. Therefore, the resins made from petroleum resources and the like emit large quantities of carbon dioxide when discarded and disposed of by incineration or the like, so that there have been concerns about damage to the environment and the possibility of global warming due to the increased emissions of carbon dioxide.

Conversely, materials of biological origin take in carbon dioxide and methane and fix them during the production process thereof. Materials of biological origin are therefore more advantageous than petroleum-based resources in that the former materials are recyclable and are not sourced from exhaustible resources. A variety of materials of biological origin have been developed. In particular, polylactic acid has been made readily available as common material because the production method of polylactic acid from corn on a large scale has been established.

However, when polylactic acid alone is used in the production of plastic materials, it is often difficult to obtain a plastic material with satisfactory physical properties. For example, in order to overcome the disadvantages associated with polylactic acid, that is, its brittleness and poor impact resistance, a biodegradable flexible resin is added to improve the physical properties of the polylactic acid, as described in patent reference 1.

[Patent Reference 1] Japanese Patent Application Laid-open No. H9-111107

### [Disclosure of Invention]

### [Issues to be addressed by the invention]

As disclosed in patent reference 1, the research undertaken was entirely focused on the biodegradability of the entire film, and the physical properties required of the film have not yet been satisfactorily improved. If the application of a film is not particularly focused around its biodegradability, it is obviously meaningful to reduce the use of raw materials derived from exhaustible resources in the overall film, and as a result, decrease the emission of carbon dioxide even though conventional raw materials of petroleum origin are still partially used. In this case, design of the film would become easier because knowledge about the physical properties of general-purpose resins developed in the past and the production methods therefor can be utilized.

In light of this, the present invention has been developed to solve the above-mentioned issues. An object of the present invention is to provide a high-quality laminated sheet material prepared from as much raw materials of biological origin as possible in order to prevent damage to the environment and reduce the amount of infinite resources being consumed.

### [Means to solve the issues]

In consideration of the above-mentioned issues, the present invention provides a laminated sheet material characterized by comprising at least one first layer and at least two different kinds of layers selected from the group consisting of a second layer, a third layer and a fourth layer, wherein:
the first layer comprises a resin composition A which comprises a polyester resin (a) containing 25% or more of a component of biological origin and a polyolefin resin (b);
the second layer comprises as the main component the polyester resin (a) containing 25% or more of a component of biological origin;
the third layer comprises as the main component the polyolefin resin (b); and
the fourth layer comprises as the main component an adhesive resin (c).

### [Effect of the Invention]

According to the present invention, it is possible to obtain a laminated sheet material which is able to contribute to the reduction of use of petroleum resources by using a lesser amount of petroleum-based resins, and at the same time, which shows excellent impact properties, transparency, adhesive properties and the like. Further, waste can be reduced by making effective use of scraps generated during the production process.

The term "film" generally refers to a thin flat product, which is usually available in the form of a roll, having an extremely small thickness relative to its length and width with the maximum thickness arbitrarily determined (Japanese Industrial Standard JIS K 6900). According to the definition prescribed by the Japanese Industrial Standard (JIS), the term "sheet" refers to a thin flat product of which the thickness is small relative to its length and width. However, there is no definite border between the terms "sheet" and "film", and it is not necessary to make a literal distinction between these two terms with respect to the present invention. In the present invention, therefore, the term "film" is also intended to include "sheet", and the term "sheet" also encompasses "film".
Furthermore, in the present invention, the expression of a "main component" indicates that other components may be included as long as the functions of the main component are not impaired, unless otherwise specified. Although the content of the main component is not particularly specified, the term "main component" implies that the ratio of the main component (the ratio of the total amounts in the case where the main component includes two or more elements) may be 50 mass% or more, preferably 70 mass% or more, and more preferably 80 mass% or more (up to 100 mass%) in the corresponding composition.
The description of "X to Y" (where X and Y are arbitrary numbers) means that the corresponding number is X or more and Y or less unless otherwise specified, and also implies that the corresponding number is preferably more than X and less than Y

### [Best Mode for Carrying out the Invention]

The laminated sheet material as an example of embodiments of present invention (hereinafter referred to as "the laminated sheet material") will now be described. The embodiments shown below are, however, not intended to limit of the scope of the present invention.

The laminated sheet material is characterized by comprising at least one first layer and at least two different kinds of layers selected from the group consisting of a second layer, a third layer and a fourth layer, wherein:
the first layer comprises a resin composition A which comprises a polyester resin (a) containing 25% or more of a component of biological origin and a polyolefin resin (b);
the second layer comprises as the main component the polyester resin (a) containing 25% or more of a component of biological origin;
the third layer comprises as the main component the polyolefin resin (b); and
the fourth layer comprises as the main component an adhesive resin (c).

### <Polyester resin (a) containing 25% or more of a component of biological origin>

The phrase "component of biological origin" as used in the present invention means a component of which the starting material is a substance generated from an organism. For example, polylactic acid is obtained by decomposing the starch from corn, sugar cane, sweet potato or the like into glucose and fermenting the glucose to make lactic acid, and then polymerizing the lactic acid.
In the present invention, the polyester resin (a) containing 25% or more of the component of biological origin means that the polyester resin (a) contains the component of biological origin as mentioned above in an amount of 25% or more by mass. When the primary raw materials for constituting the polyester resin (a) are all of biological origin, the content of the component of biological origin is regarded as being 100%. Also, when the polyester is in the form of a copolymer, it is possible to determine the content of the component of biological origin by calculating the ratio of the copolymerizable monomer(s) of biological origin.

Examples of the polyester resin containing 25% or more of the component of biological origin include polylactic acid (PLA), polyhydroxyl butyrate (PHB), polybutylene succinate (PBS), polytrimethylene terephthalate (PTT), and copolymers or mixtures thereof.
The ratio by mass of the component of biological origin is 100% in polylactic acid where the raw materials are completely of biological origin. In the case of polybutylene succinate, the above-mentioned ratio by mass is 49% when only succinic acid is of biological origin; and is 100% when 1,4-butanediol is also biologically derived. In the case of polypropylene terephthalate, the component of biological origin makes up 35% by mass.

### (Polylactic acid based polymer)

In particular, polylactic acid based polymers are most favorable because they can be industrially produced from raw plant materials by established mass-production methods and are easily available. Polylactic acid based polymers include polymers mainly composed of L-lactic acid units, D-lactic acid units or DL-lactic acid units, or mixtures of such polymers. In addition, optical isomers of lactic acid may be subjected to copolymerization (i.e., D-lactic acid is copolymerizable with L-lactic acid, and L-lactic acid is copolymerizable with D-lactic acid). Polylactic acid may comprise a small amount of other hydroxycarboxylic acids or the like as the copolymerizable monomer, and also a small amount of chain extender residue.
Examples of the copolymerizable monomer and the like included in the polylactic acid are a bifunctional aliphatic hydroxycarboxylic acid, such as glycolic acid, 3-hydroxybutyric acid, 4-hydroxybutyric acid, 2-hydroxy-n-butyric acid, 2-hydroxy-3,3-dimethylbutyric acid, 2-hydroxy-3-methylbutyric acid, 2-methyllactic acid, 2-hydroxycaproic acid and the like; and lactones such as caprolactone, butyrolactone, valerolactone and the like.
Polymerization can be carried out by any known method such as condensation polymerization, ring opening polymerization and the like with respect to the present invention. For example, in condensation polymerization, L-lactic acid, D-lactic acid, DL-lactic acid and the like may be directly subjected to condensation polymerization by dehydration in order to obtain a polylactic acid with a desired composition. Ring opening polymerization (lactide method) can produce a polylactic acid based polymer from lactide, that is, a cyclic dimer of lactic acid, using a polymerization regulator, a catalyst and the like appropriately chosen.

The polylactic acid based polymers used in the present invention may have a weight-average molecular weight (Mw) of 60,000 to 700,000, more preferably 80,000 to 400,000, and most preferably 100,000 to 300,000. When the molecular weight (Mw) is 60,000 or more, the lactic acid based polymers are able to exhibit practical levels of preferred mechanical characteristics, heat resistance and the like. When the molecular weight (Mw) is 700,000 or less, extreme increases in the melt viscosity can be prevented so that the molding processability is not impaired.

The polylactic acid based polymer for use in the present invention is commercially available, for example, under the trade name "NatureWorks" (made by NatureWorks LLC).

### (Other resins)

Polyhydroxy butyrate (PHB), which can be obtained from microorganism using methane or the like, is commercially available, for example, under the trade name "Biogreen" (made by Mitsubishi Gas Chemical Company, INC).

Polybutylene succinate (PBS) is mainly composed of succinic acid and 1,4-butanediol. The mass-production method for succinic acid from raw materials of biological origin has already been established, and the technique for producing 1,4-butanediol from the above-mentioned succinic acid is also established. Therefore, the production of polybutylene succinate of 100% biological origin using raw materials of biological origin is nearing practical use. At present, polybutylene succinate where only the succinic acid is of biological origin is industrially available. In the near future, however, it is probable that polybutylene succinate (PBS) of 100% biological origin will become industrially available. Polybutylene succinate where only succinic acid is of biological origin is commercially available under the trade name "GSPIa" (made by Mitsubishi Chemical Corporation).

Polytrimethylene terephthalate (PTT) is produced from terephthalic acid and 1,3-propanediol. At present, terephthalic acid cannot be produced from materials of biological origin, while the production technique for 1,3-propanediol from biologically derived materials has been established. Thus, polytrimethylene terephthalate (PTT) of 35% biological origin is available.

### <Polyolefin resin (b)>

The polyolefin resins used in the present invention include, but are not limited to, low-density polyethylene, linear low-densifiy polyethylene, high-density polyethylene, polypropylene, ethylene-vinyl acetate copolymer, ethylene-ethyl acrylate copolymer, ethylene-methyl acrylate copolymer, and copolymers, blends and cross-linked polymers using the above-mentioned monomers. The kind of polyolefin resin may be chosen as appropriate, for example, according to the physical properties required of the sheet material. For example, when the greatest importance is placed on the strength of the sheet material, linear low-density polyethylene resins may be chosen; and when special emphasis is placed on the adhesion properties and heat sealing performance of the sheet material, ethylene based copolymers such as ethylene-vinyl acetate copolymer, and acryl-modified polyethylene are preferably selected.

Cyclic olefin resins can also be used. As cyclic olefin polymers, random copolymers of cyclic olefin and ethylene, cyclic olefin ring-opening (co)polymers, hydrides of cyclic olefin ring-opening (co)polymers, graft modified products of the above-mentioned (co)polymers, and the like can be cited. As examples of cyclic olefins are bicyclohept-2-ene(2-norbornene) and derivatives thereof, such as norbornene, 6-methyl norbornene, 6-ethyl norbornene, 6-n-butyl norbornene, 5-propyl norbornene, 1-methyl norbornene, 7-methyl norbornene, 5,6-dimethyl norbornene, 5-phenyl norbornene, 5-benzyl norbornene, tetracyclo-3-dodecene and derivatives thereof can be cited. As the derivatives of tetracyclo-3-dodecene are, for example, 8-methyltetracyclo-3-dodecene, 8-ethyltetracyclo-3-dodecene, 8-hexyltetracyclo-3-dodecene, 2,10-dimethyltetracyclo-3-dodecene, 5,10-dimethyltetracyclo-3-dodecene, and the like can be cited.

In the present invention, random copolymers of ethylene and cyclic olefin, for example, ethylene based copolymers containing approximately 20 to 50 mol% of cyclic olefin are favorably used. Furthermore, the random copolymers containing any other α-olefins instead of ethylene and those containing, as the third comonomer, butadiene, isoprene or the like may be used. There are also various copolymers of which the glass transition temperatures vary depending on the contents of the cyclic olefin and these may also be used. To be more specific, the cyclic olefin copolymers "APEL" (trade name) made by Mitsui Chemicals, Inc., "Topas" (trade name) made by Ticona LLC, and the like can be used.

Furthermore, preferably, graft polymers prepared by modifying the above-mentioned cyclic olefin random copolymers, cyclic olefin ring-opening (co)polymers or hydrogenated products of cyclic olefin ring-opening (co)polymers with a modifier such as unsaturated carboxylic acids or anhydrides including maleic anhydride, maleic acid, itaconic anhydride, itaconic acid, (meth)acrylic acid, and the like are used.

Desirably, the refractive index of the polyolefin resin (b) may be closer to that of the polyester resin (a) containing 25% or more of the component of biological origin so as to minimize any decrease in transparency when both resins are blended. More specifically, the polyolefin resin (b) may have a refractive index of 1.40 or more and 1.55 or less.

### <Adhesive resin (c)>

Adhesive resins (c) preferably used include those provided with a portion capable of exhibiting a reactivity or affinity with respect to the polyester resin and also a portion having an affinity for the polyolefin resin.

The above-mentioned phrase "portion capable of exhibiting a reactivity or affinity with respect to the polyester resin" means adhesive resins having a functional group with high affinity for the polyester resin or a functional group reactive to the polyester resin. As examples of the functional group with the above-mentioned characteristics, an acid anhydride group, a carboxylic acid group, a carboxylic acid ester group, a carboxylic acid chloride group, a carboxylic amide group, a carboxylate salt group, a sulfonic acid group, a sulfonic acid ester group, a sulfonic acid chloride group, a sulfonic amide group, a sulfonate salt group, an epoxy group, an amino group, an imide group, an oxazoline group and the like can be cited. In particular, an acid anhydride group, a carboxylic acid group or a carboxylic acid ester group are preferable.

The above-mentioned portion having affinity for the polyolefin resin means a chain having affinity for the polyolefin resin, and to be more specific, a straight or branched saturated hydrocarbon portion as a main chain, block chain, or graft chain. Specifically, polyolefin resins or resins of hydrogenated copolymers of a styrene hydrocarbon and a conjugated diene hydrocarbon, for example, a styrene-ethylene-butadiene copolymer, a styrene-ethylene-propylene copolymer, a styrene-ethylene-butylene copolymer and the like can be cited.

In the present invention, it is preferable that the adhesive resin (c) be at least one kind of copolymer or resin selected from the group consisting of (c1) to (c4) shown below:
(c1): copolymers of a flexible aromatic hydrocarbon and a conjugated diene, or hydrogenated derivatives of these copolymers,
(c2): modified polyolefin resins,
(c3): ethylene-vinyl acetate copolymers having a vinyl acetate content of 30 to 80 mass%, and
(c4): lactic acid-acrylic mixed resins, each comprising a lactic acid based polymer (d) and an acrylic block copolymer (e) which has a polymeric block (e1) predominantly comprising an acrylic acid ester unit and a polymeric block (e2) predominantly comprising a methacrylic acid ester unit.

### (Copolymers of a flexible aromatic hydrocarbon and a conjugated diene, or hydrogenated derivatives of these copolymers (c1))

The copolymers of a flexible aromatic hydrocarbon and a conjugated diene or hydrogenated derivatives of these copolymers (c1) will now be explained.
Styrene is preferably used as the flexible aromatic hydrocarbon, and styrene homologues such as α-methylstyrene and the like can also be used.
As the conjugated diene hydrocarbons, 1,3-butadiene, 1,2-isoprene, 1,4-isoprene, 1,3-pentadiene and the like can be used, and those can also be used as hydrogenated derivatives. These may be used alone or in combination.

In the above copolymers of a flexible aromatic hydrocarbon and a conjugated diene hydrocarbon, or the hydrogenated derivatives of these copolymers, the content of the flexible aromatic hydrocarbon is preferably 5 mass% or more, more preferably 7 mass% or more, and even more preferably 10 mass% or more; and preferably 50 mass% or less, more preferably 40 mass% or less, and even more preferably 35 mass% or less when the entire mass of copolymers is a standard (100 mass%). When the flexible aromatic hydrocarbon is contained in an amount of 5 mass% or more, sufficient compatibility can be obtained and the resultant film can be prevented from becoming white opaque even when the adhesive resin (c) is added to the resin composition A comprising the polyester resin (a) containing 25% or more of the component of biological origin and the polyolefin resin (b). When the content of the aromatic hydrocarbon is 50 mass% or less, delamination can be prevented without impairing the adhesion performance of each layer.

Hydrogenated derivatives of styrene-conjugated diene random copolymers are preferably used as the hydrogenated derivatives of the copolymers of a flexible aromatic hydrocarbon and a conjugated diene hydrocarbon. The details of the hydrogenated derivatives of styrene-conjugated diene random copolymers and the production methods therefor are disclosed in Japanese Patent Application Laid-open No. H2-158643, Japanese Patent Application Laid-open No. H2-305814 and Japanese Patent Application Laid-open No. H3-72512.

The flexible aromatic hydrocarbon-conjugated diene hydrocarbon copolymers as described above may be used alone or two or more kinds of copolymers may be used in combination.

The flexible aromatic hydrocarbon-conjugated diene hydrocarbon copolymers are commercially available as the styrene-butadiene block copolymer elastomer under the trade name "Tufprene" (made by Asahi Kasei Chemicals Corporation); the hydrogenated derivative of a styrene-butadiene block copolymer under the trade name "Tuftec H" (made by Asahi Kasei Chemicals Corporation) and the trade name "Kraton G" (made by Kraton Polymers Japan); the hydrogenated derivative of a styrene-butadiene random copolymer under the trade name "Dynaron" (made by JSR Corporation); the hydrogenated derivative of a styrene-isoprene block copolymer under the trade name "Septon" (made by Kuraray Co., Ltd); and the styrene-vinyl isoprene block copolymer elastomer under the trade name "Hybrar" (made by Kuraray Co., Ltd.).

In addition, as typical products obtained by introducing a polar group into the above-mentioned flexible aromatic hydrocarbon-conjugated diene hydrocarbon copolymers or the hydrogenated derivatives thereof, maleic anhydride modified SEBS, maleic anhydride modified SEPS, epoxy modified SEBS, epoxy modified SEPS and the like can be cited. These copolymers may be used alone or in combination.

Specifically, the products "Tuftec M" (made by Asahi Kasei Chemicals Corporation), "Epofriend" (made by Daicel Chemical Industries Ltd.) and the like are commercially available.

### (Modified polyolefin resins (c2))

In the present invention, the phrase "modified polyolefin resins" refers to resins comprising polyolefin as the main component with the polyolefin being modified with an unsaturated carboxylic acid or anhydride thereof or a silane coupling agent. As the unsaturated carboxylic acid or anhydride thereof, acrylic acid, methacrylic acid, maleic acid, maleic anhydride, citraconic acid, citraconic anhydride, itaconic acid and itaconic anhydride; ester compounds prepared from the above-mentioned acids with the monoepoxy compounds of those derivatives; reaction products of the above-mentioned acids with polymers having in the molecule a group that is reactive to those acids, and the like can be cited. In addition, those metal salts are also usable. Among the above compounds, maleic anhydride is more preferably used. Moreover, these copolymers may be used alone or in combination.

As the silane coupling agent, vinyl triethoxy silane, methacryloyloxy trimethoxy silane, γ-methacryloyloxy propyl triacetyloxy silane and the like can be cited.

In order to produce the modified polyolefin resin, the modifying monomer may be subjected to copolymerization from the start to obtain a desired polymer, for example. Alternatively, the modifying monomer may be subjected to graft copolymerization once an unmodified polymer has been formed by polymerization. For the modification, the modifying monomer may be used alone or two or more monomers may be used in combination. Modified resins where the content of the modifying monomer(s) is in the range of 0.1 mass% or more and 5 mass% or less are preferably used. In particular, the modified resins obtained by graft modification are preferably used.

Specifically, products "Admer" (made by Mitsui Chemicals, Inc.), "Modic" (made by Mitsubishi Chemical Corporation), and the like are commercially available.

### (Ethylene-vinyl acetate copolymers (c3))

From among the adhesive resins (c), the clarity of the ethylene-vinyl acetate copolymers (c3) is at a high level, and this clarity can noticeably improve the transparency of the resultant wrapping film.

In the ethylene-vinyl acetate copolymer (c3), the content of vinyl acetate is preferably 30 to 80 mass%. With the vinyl acetate in an amount of 30 mass% or more, low crystallizability leads to a low modulus of elasticity at normal temperatures, thereby readily developing surface tackiness and increasing transparency. In addition, a vinyl acetate content of 80 mass% or less can prevent the occurrence of blocking of the raw materials or the like, resulting in avoidance of problems during handling. In light of this, the content of vinyl acetate may be 30 to 80 mass%, more preferably 40 to 70 mass%, and particularly preferably 45 to 60 mass%.

When the ethylene-vinyl acetate copolymer is also used as the polyolefin resin (b) mentioned above, it is preferable that the vinyl acetate content in the ethylene-vinyl acetate copolymer used as the adhesive resin (c) be more than that in the ethylene-vinyl acetate copolymer used as the polyolefin resin (b).
For example, the vinyl acetate content of the ethylene-vinyl acetate copolymer used as the polyolefin resin (b) may be controlled to 10 mass% or more and less than 30 masts% in a corresponding layer and that of the ethylene-vinyl acetate copolymer used as the adhesive resin (c) may be controlled to 30 to 80 mass% in that layer. As a result, it becomes possible to improve the adhesion between the layers (without delamination when the film is wound off and again wound up) and the transparency, with good film properties such as heat resistance, film strength, prevention of bleedout, reel-out performance of the film, appearance and the like being maintained.

### (Lactic acid-acrylic mixed resins (c4))

The lactic acid-acrylic mixed resin (c4) is a mixed resin comprising a lactic acid based polymer (d) and an acrylic block copolymer (e) which has a polymeric block predominantly composed of an acrylic acid ester unit and a polymeric block predominantly composed of a methacrylic acid ester unit.
The lactic acid-acrylic mixed resin (c4) is characterized by excellent affinity for other layers owing to the presence of the lactic acid based polymer (d), and excellent adhesion because of the presence of the acrylic acid ester-methacrylic acid ester copolymer. Another feature is that the viscosity of the resin can be adjusted by changing the mixing ratio of the lactic acid based polymer (d) to the acrylic block copolymer (e). This can decrease the difference in melt viscosity among the layers, thereby improving moldability.

For the lactic acid based polymer (d) in the lactic acid-acrylic mixed resin (c4), the same polylactic acid based polymers mentioned above may be chosen and employed. In this case, the lactic acid based polymer (d) for use in the adhesive resin (c) may be the same or different from the polylactic acid based polymer used as the polyester resin (a), and lactic acid based polymers with optimal compositions may be selected in consideration of the suitability for each layer.
In the case of the lactic acid based polymer (d) for use in the adhesive resin (c), copolymerizable monomers other than L-lactic acid unit, D-lactic acid unit and DL-lactic acid unit (racemic form) may be included.
As examples of such comonomers, glycol compounds such as ethylene glycol, propylene glycol, butanediol, decanediol, 1,4-cyclohexan methyl glycol, neopentyl glycol, glycerin, pentaerythritol, bisphenol A, polyethylene glycol, polypropylene glycol and polytetramethylene glycol; dicarboxylic acids such as oxalic acid, adipic acid, malonic acid, glutaric acid, adipic acid, azelaic acid, sebacic acid, terephthalic acid, isophthalic acid, phthalic acid, cyclohexanedicarboxylic acid, dodecanedioic acid, naphthalenedicarboxylic acid, bis(p-carboxyphenyl)methane, anthracene dicarboxylic acid, 4,4'-diphenylether dicarboxylic acid, 5-sodium sulfoisophthalic acid, and 5-tetrabutylphosphonium isophthalic acid; hydroxy-carboxylic acids such as glycolic acid, hydroxypropionic acid, hydroxybutyric acid, hydroxyvaleric acid, hydroxycaproic acid and hydroxybenzoic acid; and lactones such as caprolactone, valerolactone, propiolactone, undecalactone and 1,5-oxepane 2-one can be cited.

The contents of the acrylic acid ester unit and the methacrylic acid ester unit respectively in the above-mentioned polymeric blocks (e1) and (e2) are not particularly limited thereto as long as the contents are sufficient as the main components in the respective blocks, and may preferably be in the range of 60 to 100 mass%, and more preferably 80 to 100 mass%.

The polymeric block (e1) predominantly comprising the above-mentioned acrylic acid ester unit is a polymeric block mainly composed of an acrylic acid ester unit. As examples of the acrylic acid ester constituting the polymeric block, but are not limited to, methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, and the like can be cited. These may be used alone or in combination.

The polymeric block (e2) predominantly comprising the above-mentioned methacrylic acid ester unit is a polymer block mainly composed of a methacrylic acid ester unit. As examples of the methacrylic acid ester constituting the polymeric block, but are not limited to, methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, 2-methoxyethyl methacrylate, and the like can be cited. These may be used alone or in combination.

The acrylic block copolymer (e) comprises the polymeric block (e1) predominantly comprising the acrylic acid ester unit and the polymeric block (e2) predominantly comprising the methacrylic acid ester unit. In particular, the tri-block copolymer where the polymeric blocks (e2) are bonded to both terminals of the polymeric block (e1) is preferable because heat resistance and the like can be improved.

Preferably, another acrylic block copolymer may further comprise a polymeric block (e3) in addition to the blocks (e1 and e2) derived from monomers other than the acrylic acid ester monomer and the methacrylic acid ester monomer.
It is not particularly limiting how the polymeric block (e3) is bonded to the polymeric block (e1) or the polymeric block (e2). A configuration of (e2)-[(e1)-(e2)]n-(e3) wherein n is a counting number, (e3)-(e2)-[(e1)-(e2)]n-(e3) and the like, for example, can be cited.
As examples of the monomer constituting the polymeric block (e3), olefins such as ethylene, propylene, 1-butene, isobutylene and 1-octene; conjugated dienes such as 1,3-butadiene, isoprene and myrcene; aromatic vinyl compounds such as styrene, α-methylstyrene, p-methylstyrene and m-methylstyrene; vinyl acetate, vinylpyridine, acrylonitrile, methacrylonitrile, vinyl ketone, vinyl chloride, vinylidene chloride, vinylidene fluoride, acrylamide, methacrylamide, ε-caprolactone, valerolactone and the like can be cited.

In the lactic acid-acrylic mixed resin (c4), the ratio by mass of the lactic acid based polymer (d) to the acrylic block copolymer (e), i.e., (d):(e) is preferably 10:90 to 70:30, and more preferably 20:80 to 50:50. When the amount of the acrylic block copolymer (e) is 30 mass% or more of the total mass of (d) and (e), the function of the adhesive resin (c) can be exhibited satisfactorily. When the amount of the acryl block copolymer (e) is 90 mass% or less of the total mass of (d) and (e), the affinity for the lactic acid based polymer (d) and the affinity for other layers are preferably improved.

When the melt flow rate (determined at 230°C under a load of 21.18N in accordance with JIS K7210), hereinafter referred to as "MFR", of the lactic acid-acrylic mixed resin (c4) is 0.2 g/10 min, and above, the extrusion processability is stable at any rate, but smaller difference in melt viscosity among the layers may be preferable. In light of this, the MFR of the lactic acid-acrylic mixed resin (c4) may be preferably in the range of 5 to 50 g/10 min., and more preferably 10 to 40 g/10 min.

The corresponding adhesive layer may further comprise other polymers and additives if necessary, in addition to the lactic acid based polymer (d) and the acrylic block copolymer (e) as long as the effect of the lactic acid-acrylic mixed resin (c4) is not impaired.
For example, synthetic rubbers such as polyacrylic rubber, polybutene rubber, polyisobutylene rubber, EPR, EPDM and the like can be cited as other types of polymers might be able to be added. In addition, as examples of the additive, a mineral oil flexibilizer for improving fluidity during the forming operation, e.g., paraffin oil and naphthene oil; an inorganic filler for improving and increasing heat resistance, weathering resistance and the like, e.g., calcium carbonate, talc, carbon black, titanium oxide, silica, clay, barium sulfate and magnesium carbonate; inorganic or organic fibers for reinforcement, e.g., glass fibers and carbon fibers; a heat stabilizer; an antioxidant; a light stabilizer; a pressure-sensitive adhesive; a tackifier; a plasticizer; an antistatic agent; an expanding agent; and the like can be cited. In particular, in order to upgrade the heat resistance and weathering resistance, a heat stabilizer, antioxidant and the like may be preferably added from a practical standpoint.

The method for preparing the lactic acid-acrylic mixed resin (c4) is not particularly limited. For example, a lactic acid based polymer (d) and an acrylic block copolymer (e) may be mixed together with other polymers and additives as mentioned above, when necessary. In doing so, the mixing operation may be carried out using well known mixers or kneaders, such as a kneader-ruder, an extruder, a mixing roll, a banbury mixer and the like.
The temperature at which the mixing or kneading operation is carried out may be appropriately adjusted according to the melting temperatures of the employed lactic acid based polymer (d) and acrylic block copolymer (e), and generally adjusted within the range of 110 to 300°C.

The copolymers or resins (c1) to (c4) as mentioned above may be used alone or in combination.

### <First Layer>

The first layer is a layer comprising a resin composition A which comprises a polyester resin (a) containing 25% or more of the component of biological origin, and a polyolefin resin (b).

### (Resin composition A)

It is necessary that the resin component A comprises the polyester resin (a) containing the biological origin component in an amount of 25% or more, and a polyolefin resin (b). The polyester resin (a) containing 25% or more of the component of biological origin has the features that its rigidity is relatively high, but the resultant resin is brittle, and it tends to easily absorb water. Conversely, the polyolefin resin (b) is flexible and barely absorbs water. These resins can be used in combination to gain the advantages of both resins. The brittleness and the hardness may be designed with a comparatively high degree of freedom by controlling the mixing ratio of the two resins. Thus, a laminated structure having as the base layer comprising the above-mentioned resin composition A can provide a sheet material with excellent properties, in terms of the surface characteristics, adhesion, printability, slip properties and the like.

Preferably with respect to the present invention, the resin composition A may further comprise the adhesive resin (c). As mentioned above, adhesive resins provided with a portion capable of exhibiting reactivity or affinity with respect to the polyester resin and a portion having affinity for the polyolefin resin are preferably used. The adhesive resin can work to provide an intermediate between the polyester resin and the polyolefin resin in such a manner that the polyolefin resin and the polyester resin can be more easily dispersed in each other. As a result, transparency can possibly be improved.

The adhesive resin (c) would, by necessity, be incorporated into the first layer if the trimming loss or the like generated in the course of manufacture of the laminated sheet material according to the present invention is recycled and reused for the formation of the first layer. In this case, it is possible to use the incorporated adhesive resin as it is, or some adhesive resin (c) may be added.

### (Mixing ratio)

The mixing ratio in the resin composition A may be determined depending on the application of the laminated sheet material. When there is a need to emphasize the performance of the polyester resin (a) containing 25% or more of the biological origin component, the amount of the above-mentioned polyester resin (a) may be controlled to 50 mass% or more and 99 mass% or less. In contrast to this, when there is a need to emphasize the performance of the polyolefin resin (b), the amount of the above-mentioned polyolefin resin (b) may be controlled to 50 mass% or more and 99 mass% or less.
More specifically, for the application where the stiffness and rigidity of a sheet is required, the polyester resin (a) containing 25% or more of the biological origin component, and which shows a high elastic modulus, may be contained in an amount of 50 mass% or more and 99 mass% or less. Such a resin composition can be advantageously used for the application to, for example, cards, plates, building-related materials, clear cases and the like.
When the application requires the adhesive resin to decrease its moisture dependence or impart tensile elongation, the polyolefin resin (b), which does not readily absorb moisture and shows high flexibility, may be contained in the composition in an amount of 50 mass% or more and 99 mass% or less. Such a composition is advantageously used for the application to, for example, wrapping film, heat-sealable film and the like.
In some cases, use of at least one layer comprising 50 mass% or more of the polyester resin (a) where 25% or more of the component of biological origin is contained in combination with at least one layer comprising 50 mass% or more of the polyolefin resin (b) is a preferable embodiment because the number of degrees of freedom can be expanded when designing the laminated sheet material.

### (Compatibilizer)

The resin composition A may further comprise a compatibilizer to more uniformly blend the polyester resin (a) containing 25% or more of the biological origin component and the polyolefin resin (b). The amount of the compatibilizer may be appropriately chosen according to the desired application. Any resin used as the adhesive resin (c) mentioned above and other resins such as ethylene based copolymers can be generally employed as the compatibilizer. Examples of the ethylene based copolymers serving as the compatibilizer include ethylene-vinyl acetate copolymer, ethylene-acrylic acid copolymer, ethylene-methacrylic acid copolymer, ethylene-ethyl acrylate copolymer, ethylene-ethyl methacrylate copolymer, ethylene-methyl acrylate copolymer, ethylene-methyl methacrylate copolymer, ethylene-vinyl acetate-maleic anhydride terpolymer, ethylene-ethyl acrylate-maleic anhydride terpolymer, ethylene-glycidyl methacrylate copolymer, ethylene-vinyl acetate-glycidyl methacrylate terpolymer, and ethylene-ethyl acrylate-glycidyl methacrylate terpolymer can be cited.
In particular, ethylene-vinyl acetate copolymer, ethylene-acrylic acid copolymer, ethylene-ethyl acrylate copolymer, ethylene-methacrylic acid copolymer, ethylene-ethyl acrylate, and ethylene-ethyl methacrylate are preferably used. These compatibilizers may also be used in combination.

The product of an ethylene-vinyl acetate-maleic anhydride terpolymer is commercially available under the trade name "Bondine" (made by Sumitomo Chemical Co., Ltd.), and the products of an ethylene-glycidyl methacrylate copolymer, an ethylene vinyl acetate-glycidyl methacrylate terpolymer, and an ethylene-ethyl acrylate-glycidyl methacrylate terpolymer are also commercially available under the trade name "Bondfast" (made by Sumitomo Chemical Co., Ltd.).

### (Refractive index regulator)

A refractive index regulator may also be used for the purpose of improving transparency. The refractive index regulator used herein is a substance which is selectively dissolved in one material, and has a refractive index closer to the other material. The refractive index regulator is added with the expectation that the difference between the refractive indices of two materials will become small. In order to mix the refractive index regulator with other components, conventional kneading methods such as two-screw extrusion and the like can be employed.
By way of example, triphenyl phosphate, benzylbutyl phthalate and the like can be cited as the refractive index regulator.

The resin composition A may further comprise a heat stabilizer, a light stabilizer, a light absorber, a lubricant, a plasticizer, finely divided organic filler, finely divided inorganic filler, a coloring agent, pigment, an antioxidant, an impact modifier and the like, in order to adjust various properties depending on the application of the resultant laminated sheet material.
As the finely divided organic filler, cellulosic powders of wood flour, pulp and the like, polymer beads of olefin resin and the like, and polymer void particles such as styrene and the like can be cited.
The finely divided inorganic filler, calcium carbonate, magnesium carbonate, barium carbonate, magnesium sulfate, barium sulfate, calcium sulfate, zinc oxide, magnesium oxide, calcium oxide, titanium oxide, alumina, aluminum hydroxide, magnesium hydroxide, hydroxyapatite, silica, mica, talc, kaolin, clay, glass powder, asbestos, zeolite, silicate earth and the like can be cited.

For the preparation of the first layer, the resin composition A comprising the polyester resin (a) containing 25% or more of the biological origin component and the polyolefin resin (b), and/or the adhesive resin (c) are mixed and melt-kneaded. Conventionally, melt-kneaders are used for the mixing and kneading operation. In particular, a two-screw extruder is preferred because it is possible to form the material mixture into a sheet while kneading. Alternatively, the mixture of materials may be kneaded and extruded into a strand using a two-screw extruder and the strands may then be subjected to pelletizing before use.
The sheet thus obtained may be subjected to uniaxial or biaxial orientation in order to make a thinner film and impart higher strength to the sheet. Furthermore, the degree of shrinkage may also be adjusted by controlling the temperature of heat fixation after orientation. The film orientation can be carried out using commonly used methods, such as drawing between rolls, tenter stretching, tubular stretching, tenter simultaneous biaxial stretching and the like.

### <Second layer>

The second layer is a layer comprising as the main component the polyester resin (a) containing 25% or more of the component of biological origin as mentioned above, and the resin may not necessarily be the same as the resin used in the resin composition A for the first layer.

The second layer may further comprise other resins in addition to the polyester resin (a) containing 25% or more of the component of biological origin. In this case, as the above-mentioned other resins, a flexible material for enhancing the impact resistance of the polyester resin, a resin for improving the slip properties when exposed, and the like, can be cited.

Similarly to the first layer, the second layer may further comprise a heat stabilizer, a light stabilizer, a light absorber, a lubricant, a plasticizer, finely divided organic filler, finely divided inorganic filler, a coloring agent, pigment, an antioxidant, an impact modifier, and the like, as necessary.

### <Third layer>

The third layer is a layer comprising as the main component the polyolefin resin (b) as mentioned above, which may not necessarily be the same as the resin used in the resin composition A for the first layer.

The third layer may also comprise other resins in addition to the polyolefin resin (b). In this case, as the above-mentioned other resins, a flexible material for enhancing the impact resistance of the polyester resin, a resin for improving the slip properties when exposed, and the like, can be cited.

Also, similar to the first layer, the third layer may further comprise a heat stabilizer, a light stabilizer, a light absorber, lubricant, a plasticizer, finely divided organic filler, finely divided inorganic filler, a coloring agent, pigment, an antioxidant, an impact modifier, and the like, as necessary.

### <Fourth layer>

The fourth layer is a layer comprising as the main component the adhesive resin (c) as mentioned above, wherein layer is provided between any of the two layers selected from the first layer, the second layer, the third layer, and any other layers, for the purpose of improving interlaminar adhesion. The adhesive resin (c) used in the fourth layer may not necessarily be the same as that used in the resin composition A for the first layer. The adhesive resin may be a mixture of two or more different kinds of resins. The adhesive resin (c) may be used on its own, but can be also used in combination with other polyolefin resins, polyester resins and the like in order to improve the melt flow, to adjust the adhesion, to curtail production costs and the like. Preferably, such additional resins may be mixed so that the adhesive resin can be contained in an amount of 50 mass% or more.

### <Laminated structure>

The laminated sheet material of the present invention has a multi-layer construction characterized by comprising; at least one first layer comprising a resin composition A which comprises a polyester resin (a) wherein a component of biological origin is contained in an amount of 25% or more, and a polyolefin resin (b); and at least two different kinds of layers selected from the group consisting of:
a second layer comprising as the main component a polyester resin (a) wherein a component of biological origin is contained in an amount of 25% or more;
a third layer comprising as the main component a polyolefin resin (b); and
a fourth layer comprising as the main component an adhesive resin (c).

As examples of the laminated structure, which are not limited thereto, a three-layered structure, such as first layer/fourth layer/second layer, first layer/fourth layer/third layer, second layer/first layer/third layer, or the like; a four-layered structure such as second layer/first layer/fourth layer/third layer, third layer/first layer/fourth layer/second layer, or the like; and a five-layered structure such as second layer/fourth layer/first layer/fourth layer/second layer, third layer/fourth layer/first layer/fourth layer/third layer, first layer/fourth layer/second layer/fourth layer/first layer, first layer/fourth layer/third layer/fourth layer/first layer, second fayer/fourth layer/first layer/fourth layer/third layer, or the like, can be cited.
The ratio of thickness among the layers constituting the laminated sheet material is not particularly limited, and may be appropriately changed according to the desired application.

When the laminated sheet material is used for a plastic case by providing the sheet with creasing lines and folding the sheet along those creasing lines, the laminated structure of, for example, a second layer/fourth layer/first layer/fourth layer/second layer is preferably recommended because stiffness may be required of the sheet itself. In this case, the sheet is suitably designed in such a manner that the ratio of the total thickness of the second layers to that of the first layer may be in the range of 2:1 to 1:3 in order to easily obtain the stiffness required of the sheet.

When the laminated sheet material is subjected to thermoforming for application to press-through packaging (PTP), blister packaging and the like, the laminated structure of, for example, a third layer/fourth layer/first layer/fourth layer/third layer is preferably used because the outer layer may be required to have oil resistance, heat-sealability and the like. In this case, the sheet is favorably designed in such a manner that the ratio of the total thickness of the third layers to that of the first layer may be in the range of 2:1 to 1:2 in order to easily obtain the characteristics suitable for the above-mentioned application.

When the laminated sheet material is intended for wrapping film, it is preferable to dispose the first layer with increased flexibility as the base member and the third layers as the surface layers in order to obtain the desired adhesion and tear resistance. For the application to shrink labels for PET bottles and the like, it is preferable to dispose the first layer with flexibility as the base member and the second layers as the surface layers for printing.

For the application to cards, the laminated sheet material can be used as it is when the card is of a thin type, generally having a total thickness of 188 µm. For the application to a thick type card, such as a credit card or the like, a plurality of sheets designed for the card may be generally laminated until the total thickness reaches 760 µm. It is possible to utilize laminated sheet mateials of the present invention, each having a layered structure suitable for the overlaying sheet (with a thickness of approximately 100 µm) and a core sheet (with a thickness of about 250 µm). When consideration should be given to printability of the surface and the adaptability to press working, the sheet may preferably be constructed in such a fashion that the second layer is disposed on the surface.

In the sheet used for thermoforming, the second layers with high softening temperatures may be disposed as the outer surface layers on both sides from the viewpoint of fabricability.

Generally, these laminated sheet materials can be produced by conventional methods. For example, the first layer, the second layer and the third layer can be laminated by a dry laminating method using an adhesive. The extrusion laminating method can also be employed, by which the second layer is laminated on the first layer while being extruded. The co-extrusion method is also used for production where three or more extruders are simultaneously operated in order to extrude the materials to be laminated in the feed block or die. In particular, co-extrusion is most preferable because production is achieved by a one-time extrusion with high efficiency. Co-extrusion can be conducted by either a T-die method or a circular die method.

The laminated sheet material of the present invention may preferably contain the components of biological origin in an amount of 20% or more, and more preferably 35% or more, with respect to the entire laminated sheet material. When the amount of the components of biological origin is 20% or more, the corresponding use of exhaustible resources can be reduced.

### <Recyding>

In the production of a laminated sheet material, it is desirable to recycle any trimming loss as much as possible. In the present invention, such trimming loss and the like can be incorporated into the first layer. It is possible to correspondingly reduce a part of the material constituting the first layer by the addition of such recycled material.
For example, suppose that a film will be designed where the first layer comprises 20% of the polyester resin containing the component of biological origin. If the recyclable resin comprising 40% of polyester resin containing the biological origin component and 60% of polyolefin resin is available, equal parts of the above-mentioned recyclable resin and additional polyolefin resin may just be blended, thereby obtaining the desired first layer.

### <Repelletizing>

During the production of the laminated sheet material of the present invention, the generated trimming loss or the like may be reused through repelletizing. The recyclable resin can be incorporated into the first layer.
Repelletization may be undertaken using commonly used processes. The trimming loss or the like may be kneaded and extruded into the form of pellets using a two-screw extruder or the like, or formed into compressed pellets in a so-called granulator for reuse. In this case, control of the moisture content is of importance, and the moisture content is desirably controlled to a predetermined level or less. Preferably, the moisture content may be adjusted to 500 ppm or less, more preferably 300 ppm or less, and most preferably 100 ppm or less, thereby maintaining product quality.

### <Applications>

The tensile strength and impact strength of the obtained sheet material are improved by orientation. Further, the sheet may be used as shrink film by controlling the temperature of heat fixation after orientation. With the addition of a plasticizer, the sheet can be made flexible and used as wrapping film.
The sheet with a comparative thickness can be used for the base member of cards such as credit cards, plates and the like. In use for card base members, plates and the like, inorganic fillers, pigments and the like may be added if the sheet itself is required to be opaque or colored in the interest of a printing operation or the like.
Moreover, the sheet material can be used for making containers when formed into a desired shape by thermoforming, deep drawing and the like.

The surface of the sheet material may be subjected to corona treatment to improve the adhesion properties of the sheet. Also, in order to make practical use of the sheet material, the sheet material may be attached to other films and the like. For example, by attaching a heat-sealable thermoplastic resin to the sheet material in order to obtain a laminate, the sheet material can be used as a packaging bag. Other functions can be imparted to the sheet material by overlaying a heat-resistant resin, gas-barrier resin or the like on the sheet material. For example, aluminum, aluminum oxide, silicon oxide or the like may be deposited on the surface of the sheet material to improve the barrier properties thereof. The resultant product can be used as a sheet for printing as a matter of course.

Furthermore, by making creasing lines on the sheet material after biaxial orientation, the sheet material can be used as plastic cases after folding.

### [Working Examples]

The present invention will now be explained more specifically with reference to the following working examples, however, it should be appreciated that these examples are not intended to limit the scope of the invention in any way.

### [Working Example 1]

Using a two-screw extruder, 20 mass% of a polyester resin (a) containing 25% or more of a component of biological origin, i.e., a half-and-half resin mixture of a polylactic acid "NatureWorks 4060" (made by NatureWorks LLC, with a D-lactic acid ratio of 12%) and a polylactic acid "NatureWorks 4050" (made by NatureWorks LLC, with a D-lactic acid ratio of 5.5%); 75 mass% of a polyolefin resin (b), i.e., a polypropylene resin "Wintec WFX6" (made by Mitsubishi Polypropylene Corporation, with a refractive index of 1.4971 and a melting point of 125°C); and 5 mass% of an adhesive resin (c), i.e., an acid-modified styrene resin "Dynaron 8630P" (made by JSR Corporation, an acid-modified hydrogenated SBR) were mixed and kneaded to prepare a mixed resin composition in the form of pellets for formation of a first layer (hereinafter referred to as a resin composition "A-1").

In order to form a polyester resin (a) containing 25% or more of a component of biological origin, 45 mass% of a polylactic acid "NatureWorks 4060" (made by NatureWorks LLC, with a D-lactic ratio of 12), 45 mass% of a polylactic acid "NatureWorks 4050" (made by NatureWorks LLC, with a D-lactic acid ratio of 5.5), and 10 mass% of a lactic acid based copolymer "Plamate PD-150" (made by Dainippon Ink & Chemicals, Inc.) were mixed. The mixture was kneaded using a two-screw extruder in order to prepare a mixed resin composition in the form of pellets for formation of a second layer (hereinafter referred to as a resin composition "a-1").

Three extruders were respectively charged with the resin composition A-1 for the first layer, the resin composition a-1 for the second layer, and an adhesive resin (c) for formation of a fourth layer, i.e., a modified polyolefin resin "Admer SF731" (an acid-modified polyolefin made by Mitsui Chemicals, Inc., hereinafter referred to as a resin composition "c-1"). The three resins were individually extruded and then the resin composition a-1 and the resin composition c-1 were each separated into two channels. Thus, a five-layered laminate of the second layer (resin composition a-1), the fourth layer (resin composition c-1), the first layer (resin composition A-1), the fourth layer (resin composition c-1) and the second layer (resin composition a-1) was finally formed in the die. The five-layered laminate was brought into close contact with the rolls which is cooled to 30°C, so that a laminate sheet material (hereinafter referred to as sheet No. 1) having layer thicknesses of 50 µm, 5 µm, 150 µm, 5 µm and 50 µm respectively was obtained. The obtained laminate sheet material contains components of biological origin in an amount of approximately 50%.

Next, creasing lines for folding were made on sheet No. 1, and the sheet material was folded along the creasing lines. The sheet material was easily folded with no generation of cracks, which indicated the sheet's practicability as a case to be finished by folding.

### [Working Example 2]

The procedures for preparation of sheet No. 1 in working example 1 were repeated except that the polylactic acid products used in working example 1 were all replaced by polylactic acid "NatureWorks 4032" (made by NatureWorks LLC, with a D-lactic acid ratio of 1.4), in order to obtain a laminate sheet material (hereinafter referred to as sheet No. 2). The obtained laminate sheet material contains components of biological origin in an amount of approximately 50%.

Next, the obtained sheet material No. 2 was stretched three fold in the machine direction thereof at 90°C using a machine direction stretcher of a roll type, and subsequently by 3.2 fold in the cross direction at 110°C using a transverse direction stretcher of tenter type, and the sheet material was then heated at 130°C for five seconds. The layer thicknesses of the sheet material thus obtained were 5.5 µm, 0.5 µm, 17 µm, 0.5 µm and 5.5 µm respectively.

After the steps of stretching and heating, the surface of sheet No. 2 was subjected to corona treatment and attached to a 40-µm-thick film of straight-chain low-density polyethylene "TUX-FCS" (made by TOHCELLO Co., Ltd.) by dry lamination. Heat-sealing was conducted along the outer edge, with the dry-laminated surface facing inward. An excellent molded bag was obtained, which indicated the sheet's practicability as a packaging bag.

### [Working Example 3]

The procedures for preparation of sheet No. 1 in working example 1 were repeated except that the layered structure of sheet No. 1 in working example 1 was changed to a five-layered laminated of a first layer (resin composition A-1), a fourth layer (resin composition c-1), a second layer (resin composition a-1), a fourth layer (resin composition c-1) and a first layer (resin composition A-1) with the respective layer thicknesses of 50 µm, 5 µm, 150 µm, 5 µm and 50 µm, thereby obtaining a laminate sheet material (hereinafter referred to as sheet No. 3). The obtained laminate sheet material contains components of biological origin in an amount of approximately 64%.

Next, sheet No. 3 was molded into a sheet for press through packaging (PTP) using a PTP molding machine, and thereafter an aluminum foil was attached to the sheet material. The sheet material was then stamped into the shape of a PTP package. An excellent molded product was obtained, which indicated the sheet's practicability for press through packaging (PTP).

### [Working Example 4]

Using a two-screw extruder, 20 mass% of a polylactic acid "NatureWorks 4060" (made by NatureWorks LLC, with a D-lactic acid ratio of 12) as the polyester resin (a) containing 25% or more of biological origin component, 75 mass% of an ethylene-vinyl acetate copolymer "Novatec EVA LV430" (made by Mitsubishi Polyethylene Corporation, with a refractive index of 1.496 and a vinyl acetate content of 15%) as the polyolefin resin (b), and 5 mass% of an acid-modified styrene resin "Dynaron 8630P" (an acid-modified hydrogenated SBR, made by JSR Corporation) as the adhesive resin (c) were mixed and kneaded to prepare a mixed resin composition in the form of pellets for formation of a first layer (hereinafter referred to as a resin composition "A-2").

A mixture of 90 mass% of a polylactic acid "NatureWorks 4060" (made by NatureWorks LLC, with a D-lactic acid ratio of 12) and 10 mass% of a lactic acid based copolymer "Plamate Pod-150" (made by Dainippon Ink & Chemicals, Inc.) was prepared as the polyester resin (a) containing 25% or more of biological origin component and kneaded using a two-screw extruder in order to obtain a mixed resin composition in the form of pellets for formation of a second layer (hereinafter referred to as a resin composition "a-2").

Four extruders were respectively charged with the resin composition A-2 for the first layer, the resin composition a-2 for the second layer, the above-mentioned resin composition c-1 as the adhesive resin (c) for the fourth layer, and an ethylene-vinyl acetate copolymer "Novatec EVA LV430" (made by Mitsubishi Polyethylene Corporation, with a refractive index of 1.496 and a vinyl acetate content of 15%), hereinafter referred to as a resin composition "b-1 ", as the polyolefin resin (b) for the third layer. The four resins were individually extruded, and then a four-layered laminate of the second layer (resin composition a-2), the fourth layer (resin composition c-1), the first layer (resin composition A-2) and the third layer (resin composition b-1) was finally formed in the die. The four-layered laminate was brought into close contact with the rolls which is cooled to 30°C, so that a laminate sheet material (hereinafter referred to as sheet No. 4) having layer thicknesses of 20 µm, 5 µm, 20 µm and 30 µm respectively was obtained. The obtained laminate sheet material contains components of biological origin in an amount of approximately 40%.

Next, one sheet No. 4 was overlaid on another sheet material No. 4 with the third layer sides of both sheets facing toward each other, and a few slices of ham were inserted between the No. 4 sheets, followed by heat-sealing of the four sides with evacuation of any air therefrom. As a result, an excellent packaging bag was obtained, which indicated the sheet's practicability as a packaging bag for vacuum packing.

### [Working Example 5]

The procedures for preparation of sheet No. 4 in Example 4 were repeated except that the resin composition A-2 was replaced by a mixed resin in the form of pellets (hereinafter referred to as a resin composition "A-3") that was prepared by blending and kneading 50 mass% of the trimming loss (containing the biological origin component in an amount of approximately 40%) generated during the production process of sheet No. 4, 45 mass% of the resin composition b-1, and 5 mass% of the resin composition c-1. Thus, sheet No. 5 was obtained. The obtained laminate sheet material contains components of biological origin in an amount of approximately 40%.

### [Working Example 6]

Using a two-screw extruder, 80 mass% of a polylactic acid "NatureWorks 4032" (made by NatureWorks LLC, with a D-lactic acid ratio of 1.4) as the polyester resin (a) containing 25% or more of biological origin component, and 20 mass% of a polypropylene resin "Wintec WFX6" (made by Mitsubishi Polypropylene Corporation, with a refractive index of 1.4971 and a melting point of 125°C) as the polyolefin resin (b) were melted and kneaded in order to prepare a mixed resin composition in the form of pellets for formation of a first layer (hereinafter referred to as a resin composition "A-4").

A mixture of 90 mass% of a polylactic acid "NatureWorks 4032" (made by NatureWorks LLC, with a D-lactic acid ratio of 1.4) and 10 mass% of a lactic acid based copolymer "Plamate PD-150" (made by Dainippon Ink & Chemicals, Inc.) was prepared as the polyester resin (a) containing 25% or more of biological origin component and kneaded using a two-screw extruder in order to obtain a mixed resin composition in the form of pellets for formation of a second layer (hereinafter referred to as a resin composition "a-3").

Three extruders were respectively charged with the resin composition A-4 for the first layer, the resin composition a-3 for the second layer, and a styrene-vinyl isoprene block copolymer elastomer "Hybrar 7125" (SIS hydrogenated product, made by Kuraray Co., Ltd., hereinafter referred to as a resin composition "c-2") as the adhesive resin (c) for the fourth layer. The three resins were individually extruded and then the resin composition a-3 and the resin composition c-2 were each separated into two channels. Thus, a five-layered laminate of the second layer (resin composition a-3), the fourth layer (resin composition c-3), the first layer (resin composition A-4), the fourth layer (resin composition c-3) and the second layer (resin composition a-3) was finally formed in the die. The five-layered laminate sheet was brought into close contact with the rolls which is cooled to 30°C, so that a laminate sheet material (hereinafter referred to as sheet No. 6) having layer thicknesses of 215 µm, 45 µm, 420 µm, 45 µm and 215 µm respectively was obtained. The obtained laminate sheet material contains components of biological origin in an amount of approximately 79%.

Next, the obtained sheet material No. 6 was stretched two and a half fold in the machine direction thereof at 90°C using a machine direction stretcher of a roll type, and subsequently stretched two fold in the cross direction at 110°C using a transverse direction stretcher of tenter type, and the sheet material was then heated at 130°C for five seconds. The layer thicknesses of the sheet material thus obtained were 43 µm, 9 µm, 84 µm, 9 µm and 43 µm respectively.

After that, the surface of sheet No. 6 was subjected to corona treatment. An image patter was printed on the surface of the sheet and the sheet was stamped into a card shape. As a result, an excellent card was obtained, which indicated the sheet's practicability as a card.

## Claims

1. A laminated sheet material comprising at least one first layer and at least two different kinds of layers selected from the group consisting of a second layer, a third layer and a fourth layer, wherein:
the first layer comprises a resin composition A which comprises a polyester resin (a) containing 25% or more of a component of biological origin and a polyolefin resin (b);
the second layer comprises as the main component the polyester resin (a) containing 25% or more of a component of biological origin;
the third layer comprises as the main component the polyolefin resin (b); and
the fourth layer comprises as the main component an adhesive resin (c).

2. The laminated sheet material as recited in claim 1, wherein the adhesive resin (c) is at least one copolymer or resin selected from the group consisting of (c1) to (c4):
(c1): copolymers of a flexible aromatic hydrocarbon and a conjugated diene, or hydrogenated derivatives of these copolymers,
(c2): modified polyolefin resins,
(c3): ethylene-vinyl acetate copolymers having a vinyl acetate content of 30 to 80 mass%, and
(c4): lactic acid-acrylic mixed resins, each comprising a lactic acid based polymer (d) and an acrylic block copolymer (e) which has a polymeric block (e1) predominantly comprising an acrylic acid ester unit and a polymeric block (e2) predominantly comprising a methacrylic acid ester unit.

3. The laminated sheet material as recited in claim 1 or 2, wherein the resin composition A further comprises the adhesive resin (c).

4. The laminated sheet material as recited in any one of claims 1 to 3, wherein the polyester resin (a) containing 25% or more of the biological origin component is a polylactic acid based polymer.

5. The laminated sheet material as recited in any one of claims 1 to 4, wherein said polyolefin resin (b) has a refractive index of 1.40 or more and 1.55 or less.

6. The laminated sheet material as recited in any one of claims 1 to 5, wherein the polyester resin (a) containing 25% or more of the component of biological origin is contained in the resin composition A in an amount of 50 mass% or more and 99 mass% or less.

7. The laminated sheet material as recited in any one of claims 1 to 5, wherein the polyolefin resin (b) is contained in the resin composition A in an amount of 50 mass% or more and 99 mass% or less.

8. A bag prepared from the laminated sheet material as recited in any one of claims 1 to 7.

9. A case to be finished by folding, prepared from the laminated sheet material as recited in any one of claims 1 to 7.

10. A sheet for press-through packaging (PTP) prepared from the laminated sheet material as recited in any one of claims 1 to 7.

11. A packaging bag for vacuum packing, prepared from the laminated sheet material as recited in any one of claims 1 to 7.

12. A card prepared from the laminated sheet material as recited in any one of claims 1 to 7.
